# EUROPÄISCHE PATENTSCHRIFT

(11) **EP 2 871 169 B1**
(45) Veröffentlichungstag und Bekanntmachung des Hinweises auf die Patenterteilung: **05.01.2022**
(21) Anmeldenummer: 13192246.0
(22) Anmeldetag: 08.11.2013
(51) Int. Cl.: C04B 26/02, C04B 26/06, C04B 26/16, C04B 26/32, C09D 5/02, E04B 1/78, C04B 111/00, C04B 111/28

(54) **Dispersionsmasse, Putzschichtsystem und Wärmedämmverbundsystem**
Dispersion composition, plaster layer system and thermal insulation compound system
Composition de dispersion, système de couche d'enduit et système composite d'isolation thermique

(43) Veröffentlichungstag der Anmeldung: 13.05.2015
(73) Patentinhaber: DAW SE, 64372 Ober-Ramstadt (DE)
(72) Erfinder: Brox, Matthias, 36199 Rotenburg (DE); Stark, Heiko, 99837 Berka (DE); Winter, Enrico, 36266 Heringen / Werra (DE); Rupprecht, Daniel, 99819 Förtha (DE); Tank, Volker, 79219 Staufen (DE)
(74) Vertreter: Metten, Karl-Heinz

(56) Entgegenhaltungen:
- EP-A1- 2 607 330
- EP-A2- 0 004 885
- CH-A5- 595 298
- DE-A1- 2 227 188
- DE-A1- 3 601 689
- DE-C1- 19 910 602
- DATABASE WPI Week 200901 Thomson Scientific, London, GB; AN 2009-A00694 XP002722889, & CN 101 130 457 A (CHEN X) 27. Februar 2008 (2008-02-27) & CN 101 130 457 A (XIONGZAI CHEN [CN] XIONGZAI CHEN) 27. Februar 2008 (2008-02-27)
- CZIESIELSKI E ET AL: "WARMEDAMMVERBUNDSYSTEME. \ANFORDERUNGEN, KONSTRUKTIVE AUSBILDUNG UND AUSWIRKUNGEN AUF DAS KORROSIONSVERHALTEN VON STAHLBETONBAUTEILEN", BAUPHYSIK, ERNST & SOHN VERLAG. BERLIN, DE, Bd. 13, Nr. 1, 1. Februar 1991 (1991-02-01), Seiten 26-32, XP000147133, ISSN: 0171-5445
- None

## Beschreibung

Die vorliegende Erfindung betrifft eine spritz- und/oder spachtelfähige Dispersionsmasse. Ferner betrifft die Erfindung ein Putzschichtsystem erhalten durch Spritz- und/oder Spachtelauftrag der erfindungsgemäßen Dispersionsmasse. Außerdem betrifft die Erfindung ein Wärmedämmverbundsystem enthaltend das Putzschichtsystem. Schließlich betrifft die Erfindung die Verwendung der erfindungsgemäßen Dispersionsmasse als Putzmasse oder als Bestandteil einer Putzmasse sowie die Verwendung des erfindungsgemäßen Wärmedämmverbundsystems zur Verkleidung von Gebäuden oder Teilen davon.

Putzbeschichtungen werden schon seit sehr langer Zeit zu Verkleidung von Gebäuden oder Teilen davon, insbesondere von Außenfassaden verwendet. Derartige Putzbeschichtungen können dabei mehrere Funktionen übernehmen. Zum einen wird aus ästhetischen Gründen auf Putzbeschichtungen zurückgegriffen. Des Weiteren kann es von Vorteil sein, eine gleichmäßige bzw. vergleichmäßigende Oberfläche einer Fassade im Wege einer Putzbeschichtung zu erhalten, beispielsweise um Ablagerungen aus der Luft oder aus Niederschlägen auf der Fassadenoberfläche zu minimieren.

Anders als bei Fassadenflächen aus Klinkern oder Natursteinen oder dergleichen sind Putzbeschichtungen regelmäßig wesentlich empfindlicher gegenüber mechanischen Beschädigungen. Dies trifft insbesondere auf solche Putzbeschichtungen zu, die in Wärmedämmverbundsystemen eingesetzt werden und hier beispielsweise auf geschäumten oder porösen Dämmmaterialien angebracht werden. Hier ist das Gesamtsystem weicher, als das Gesamtsystem, wenn der Putz direkt auf das Mauerwerk aufgebracht wird. So geschieht es nicht selten, dass durch Stöße mit harten Gegenständen, beispielsweise Fahrradlenkern, eine Außenfassade bildende Putzbeschichtung Dellen, Risse oder sogar Materialabtrennungen zeigt. Mit derartigen Schäden geht u.a. auch die Gefahr des Feuchteeintrags in das Wandsystem einher. Derartige Beeinträchtigungen der Oberfläche lassen sich nicht durch einfaches Überstreichen beheben, sondern erfordern in der Regel eine von einem Fachmann durchzuführende Reparatur. Dieses bringt mitunter signifikante Instandhaltungskosten mit sich. Auch beobachtet man bei Putzbeschichtungen im Laufe der Zeit die Bildung von Rissen. Auch eine derartige Beeinträchtigung der Oberfläche kann im Allgemeinen nur durch einen Fachmann behoben werden.

Um den vorangehend genannten Anforderungen gerecht zu werden, sind seit jeher vielfältige Versuche unternommen worden. Beispielsweise strebt die DE 10 2010 028 914 eine Putzbeschichtung an, die sich besonders schnell verfestigt und die als schall- und wärmedämmendes Material zur Ausfüllung von Lücken in Wärmedämmverbundsystemen geeignet sein soll. Zur Lösung dieses Problems wird eine spritz- und spachtelfähige Masse vorgeschlagen, enthaltend neben einer wässrigen Polymerdispersion einen Superabsorber, Schaumstoffpartikel und Wasser. Besonders geeignet sollen dabei solche Massen sein, bestehend aus 20 bis 50 Gewichtsteilen, bezogen auf Feststoff, wässriger Polymerdispersion, 0,1 bis 3 Gewichtsteilen an einem Schäumungsmittel, 0,1 bis 3 Gewichtsteilen eines Verdickers, 1 bis 50 Gewichtsteilen eines Füllstoffs, 5 bis 10 Gewichtsteilen eines Flammschutzmittels, 0,5 bis 5 Gewichtsteilen eines Superabsorbers, 10 bis 300 Gewichtsteilen Wasser und Schaumstoffpartikeln, wobei sich die Gewichtsteile jeweils auf 100 Gewichtsteile Schaumstoffpartikel beziehen. Um eine hinreichende Wärmedämmung der aus diesen Massen erhaltenen Putzbeschichtungen zu gewährleisten, wird vorgeschlagen, dass als Schaumstoffpartikel vorgeschäumtes, expandiertes Polystyrol verwendet werden soll, dass 0,1 bis 10 Gewichtsprozent an athermanen Partikeln enthält.

Die Druckschrift DE 101 23 908 befasst sich mit der Herstellung wärmedämmender Leicht- und Dämmputze auf Basis von hydraulischen Bindemitteln und Zuschlägen. Aufgrund der starken Dichteunterschiede der diesen Putzen zu Grunde liegenden Trockenmischungen ist regelmäßig eine gleichmäßige Vermischung der Bindemittel nicht möglich. Hiermit gehen Festigkeitsschwankungen in der Putzbeschichtung einher. Um eine derartige Entmischung zu unterbinden, schlägt die DE 101 23 908 vor, das Bindemittel vor oder nach dem Vermischen mit den Schaumpolystyrolpartikeln auf Temperaturen oberhalb von 50°C zu erhitzen. Ein weiterer Nachteil der Verwendung von Putzen auf Basis hydraulischer Bindemitteln wie Zement ist, dass diese Putze in der Regel nicht verarbeitungsfertig zur Verfügung stehen. Vielmehr sind die einzelnen Bestandteile zunächst separat an die Baustelle anzuliefern, um unter Zugabe großer Mengen an Wasser hergestellt werden zu können. Hierbei ist auch eine Reifezeit in den Herstellungsprozess mit einzurechnen. Der Einsatz von Putzen auf Basis hydraulischer Bindemittel ist daher im Allgemeinen zeit-, arbeits- und folglich auch kostenintensiv, wobei häufig auch noch besondere Maßnahmen wegen der staubigen Konsistenz der Komponenten erforderlich werden.

Dokument DE 10 2007 050 669 befasst sich mit der Zurverfügungstellung von Putzmörteln, die einfach verarbeitbar, robust und haltbar sind und gleichzeitig die Vorteile liefern, die von klimatisch ausgleichenden Werkstoffen bekannt sind. Derartige Putzbeschichtungen sollen sich als Innenputze eignen und, ohne dass ein weiterer Anstrich oder eine Tapete erforderlich wäre, ein angenehmes Raumklima schaffen. Dieses soll gemäß der DE 10 2007 050 669 durch einen Putzmörtel erreicht werden, der sich aus 10 bis 25 Gewichtsprozent an Kalkhydrat, Zement oder Gips als mineralischem Bindemittel, 0,5 bis 20 Gewichtsprozent an Glas-Mikrohohlkugeln mit einer Körnung bis 0,3 mm, 1 bis 15 Gewichtsprozent eines porösen Leichtzuschlags, 8 bis 15 Gewichtsprozent an Gesteinsmehl als Füllstoff, bis 1 Gewichtsprozent an Additiven und Sand zu insgesamt 100 Prozent zusammensetzt. Als poröse Leichtzuschlagstoffe werden Perlite, Toberit und Calciumsilicathydrat vorgeschlagen.

Aus der DE 298 25 145 geht ein wärmedämmender Leichtputz auf Basis von hydraulischen Bindemitteln und Zuschlägen aus Schaumpolystyrol-Partikeln, welche 0,1 bis 10 Gewichtsprozent an Ruß- oder Graphit-Partikel enthalten, hervor. Mit den genannten wärmedämmenden Leichtputzen auf Basis von hydraulischen Bindemitteln soll sich verhindern lassen, dass nach dem Auftragen dieser Leichtputze auf die Wand weiße Agglomerate von Schaumpartikeln in grauen Zementflächen sichtbar sind.

In der DE 34 33 543 wird eine Innenputzmasse beschrieben, die sowohl wärmedämmend als auch schallisolierend ist und außerdem über eine gute Haftung und Verarbeitbarkeit verfügt, und zwar insbesondere auch auf stark saugenden Untergründen. Eine solchen Anforderungen gerecht werdende Putzmasse soll gemäß der DE 34 33 543 35 bis 50 Gewichtsprozent Portlandzement, 15 bis 20 Gewichtsprozent Kalkhydrat, 30 bis 40 Gewichtsprozent Sand oder Kalzit und 3 bis 7 Gewichtsprozent Leichtzuschlagsstoffe in Form einer Kombination von Polystyrol in gefräster und/oder gemahlener Teilchenform und Perlite enthalten. Hierbei haben der Sand bzw. der Kalzit eine Korngrößenverteilung aufzuweisen, die im Bereich von 0 bis 3 mm liegt. Zusätzlich haben höchstens 30 Prozent der Gesamtmenge dieser Stoffe eine Korngröße oberhalb von 2 mm zu besitzen.

Gemäß der DE 20 2004 011 761 sollen sich Spannungsrisse in Außen- und Innenputzen durch Verwendung einer Spachtelmasse vermeiden lassen, bestehend aus einem Füllstoff, der vakuumisierte Glas-keramische Mikrohohlkörperchen und ein Bindemittel aus einer Kunststoffdispersion aufweist, wobei der mikrokeramische Anteil mindestens 60 bis 90 Prozent der Trockenmasse zu umfassen hat.

Die CN 101 130 457 offenbart eine wärmeisolierende wasserdichte Aufschlämmung, die aus Grundmaterial und Hilfsmaterial besteht, wobei das Grundmaterial aus 30-40% Polyvinylalkoholkleber, 3-5% Vinylacetat-Ethylen-copolymerisierter Emulsion, 0.1-0.2% modifizierten Polypropylenfasern, 50-60% leichtgewichtigem aktiven Calciumcarbonat und 6-10% Natriumcarboxymethylcellulose besteht.

Die CH 595 298 offenbart einen flüssigen, wärmeisolierenden Außenputz, der ein Bindemittel aus Kunststoff aufweist, ein Isoliermaterial zur Wärmeisolation und ein Füllmaterial zur Erhöhung der Festigkeit. Das Isoliermaterial kann aus Korkteilen bestehen und das Füllmaterial aus Astbestfasern oder Kunstfasern.

Die EP 0 004 885 betrifft eine Wärmedämmschicht auf Basis von organischen, geschlossenzelligen Schaumstoffteilchen, Bindemitteln aus einer wässrigen Copolymerisatdispersion und einem weiteren Kunstharz sowie Verarbeitungshilfsstoffen. Enthalten sind ferner ein Härter für Vorkondensate von Harnstoff-Formaledhydharzen oder Melamin-Formaledhydharzen, ein Trocknungsmittel und ein wasserlösliches Thixotropierungsmittel.

Die DE2227188 betrifft eine Beschichtung von Körpern des Hoch- und Tiefbaues, z.B. der Schauflächen von Mauern, Wänden, Decken, Betonfertigteilen und dergleichen aus Holz, Stein, Kunststein, Zementasbest oder dergleichen, wobei sie (volumenanteilig) verarbeitungsfertig aus 10-40% Kaliumsilikat (K₂SiO₃), 10-30% Kunstharzdispersion (z.B. Polyvinylacetatdispersion, Epoxydharzemulsion oder einer artähnlichen Dispersion), 2-10% Aluminiumsilikat (Al₂SiO₅), 10-50% SiO₂ und Wasser besteht.

Die DE 199 03 756 wendet sich dem Problem zu, einen Putz zur Verfügung zu stellen, der, ohne dass der Untergrund vorbehandelt werden muss, auf diesen aufgetragen werden kann und der nach dem Abbinden eine möglichst glatte Oberfläche aufweist. Eine geeignete Putzmasse hat dabei aus einer Bindemitteldispersion, kantengerundeten Quarzkörnern, 5 bis 20 Gewichtsprozent an Kunststoffflocken, wenigstens einem weiteren Zusatzstoff und Wasser zu bestehen.

Die aus dem Stand der Technik bekannten Putzbeschichtungen lassen noch stets Wünsche offen. Der vorliegenden Erfindung lag daher die Aufgabe zu Grunde, eine verbesserte Putzbeschichtung zur Verfügung zu stellen, die nicht mit den Nachteilen des Stands der Technik behaftet ist. Insbesondere lag der Erfindung die Aufgabe zu Grunde, Putzbeschichtungen verfügbar zu machen, die sehr stoß- bzw. schlagfest sind, die sich gleichwohl gut und zuverlässig verarbeiten lassen und/oder die einen Beitrag zu einer Wärmedämmung liefern. Ferner lag der Erfindung die Aufgabe zu Grunde, solche Putzbeschichtungen bereit zu stellen, die größere Sanierungsintervalle zulassen und/oder nicht zur Rissbildung neigen.

Demgemäß wurde eine spritz- und/oder spachtelfähige Dispersionsmasse gefunden, umfassend
- Polymerschaumpartikel, insbesondere Polymerschaumkugeln,
- mindestens einen Leichtfüllstoff, wobei die Leichtfüllstoffe eine Dichte kleiner oder gleich 600 g/l aufweisen und ausgewählt sind aus der Gruppe bestehend aus Blähglas; geblähten vulkanischen Gesteinen; Blähton; Blähschiefer; Glasbeton; Schaumglas; porösem Vulkangestein; Flugasche; Kesselsand; geblähtem Vermiculit; silikatischen Mikrohohlkugeln; expandierten Aluminiumsilikaten; amorphen Aluminiumsilikaten; Calciumsili-kathydraten; Schichtsilikaten; Silikat-Aerogelen; Korkpartikeln und beliebigen Mischungen der genannten Leichtfüllstoffe,
- mindestens ein Fasermaterial in Form von Schnittfasern,
- mindestens ein organisches Bindemittel,
- mindestens einen weiteren Füllstoff, wobei dieser weitere Füllstoff eine Dichte größer 600 g/l aufweist,
- Wasser, und
- mindestens ein Verdickungsmittel und/oder mindestens ein Netz- bzw. Dispergiermittel und/oder mindestens ein Konservierungsmittel und/oder mindestens ein Flammschutzmittel und/oder mindestens ein Farbmittel und/oder mindestens ein Entschäumungsmittel,
wobei die gemittelte Partikelgröße der Polymerschaumpartikel größer ist als die gemittelte Partikelgröße des Leichtfüllstoffs und auch größer als die gemittelte Partikelgröße des weiteren Füllstoffs.

Geeignete Polymerschaumpartikel basieren in einer Ausführungsform auf geschäumten Polyolefinen, insbesondere aus Polyethylen oder Polypropylen, oder geschäumten StyrolPolymerisaten, insbesondere expandiertem Polystyrol (EPS). Selbstverständlich können auch beliebige Mischungen an Polymerschaumpartikeln verwendet werden. In einer besonders zweckmäßigen Ausgestaltung verfügen die Polymerschaumpartikel, insbesondere die expandierten Polystyrolpartikel, über einen durchschnittlichen Partikeldurchmesser (d50-Wert) im Bereich von 0,3 mm bis 2,5 mm, vorzugsweise im Bereich von 0,4 mm bis 2,0 mm und besonders bevorzugt von 0,5 mm bis 1,6 mm. In einer besonders geeigneten Ausführungsform liegt der durchschnittliche Partikelgrößendurchmesser im Bereich von 0,7 bis 1,4 mm oder im Bereich von 0,9 bis 1,2 mm. Die Größe des Partikeldurchmessers bzw. des durchschnittlichen Partikeldurchmessers kann nach für den Fachmann bekannten Verfahren ermittelt werden. Die durchschnittliche Partikelgröße, d.h. der d50-Wert kann mit einem sogenannten Laser Scattering Particle Size Distribution Analyser, wie von der Firma Horiba unter der Gerätebezeichnung "LA 950 V2" erhältlich, bestimmt werden. Mit derartigen Geräten lassen sich auch die entsprechenden d10- und d90-Werte ohne Weiteres bestimmen. In einer bevorzugten zweckmäßigen Ausgestaltung verfügen die Polymerschaumpartikel, insbesondere die expandierten Polystyrolpartikel, über einen d10-Wert im Bereich von 0,2 mm bis 1,2 mm, vorzugsweise im Bereich von 0,5 mm bis 1,0 mm und besonders bevorzugt von 0,7 mm bis 0,9 mm. In einer weiteren bevorzugten zweckmäßigen Ausgestaltung verfügen die Polymerschaumpartikel, insbesondere die expandierten Polystyrolpartikel, über einen d90-Wert im Bereich von 0,8 mm bis 2,5 mm, vorzugsweise im Bereich von 1,0 mm bis 2,0 mm und besonders bevorzugt von 1,1 mm bis 1,6 mm.

Die Polymerschaumpartikel sind vorzugsweise im Wesentlichen sphärisch geformt, können jedoch auch eine davon abweichende Form aufweisen, beispielsweise eine ellipsen-ähnliche oder unregelmäßige Grundform besitzen. Auch diesen Partikeln kann ein mittlerer Partikeldurchmesser zugewiesen werden. Bei unregelmäßig geformten Partikeln wird diese Größe auch physikalischer Äquivalenzdurchmesser genannt. Er berechnet sich üblicherweise aus dem Vergleich einer Eigenschaft des unregelmäßigen Teilchens mit einer Eigenschaft eines regelmäßig geformten Teilchens.

Bei den Polymerschaumpartikeln im Sinne der vorliegenden Erfindung handelt es sich zweckmäßigerweise um im Wesentlichen vollständig ausgeschäumte Polymerpartikel.

Der Gewichtsanteil der Polymerschaumpartikel, bezogen auf das Gesamtgewicht der Dispersionsmasse, liegt üblicherweise im Bereich von 0,05 bis 1,0 Gewichtsprozent, vorzugsweise im Bereich von 0,1 bis 0,8 Gewichtsprozent und besonders bevorzugt im Bereich von 0,2 bis 0,5 Gewichtsprozent.

Für die erfindungsgemäße Dispersionsmasse verwendet man in einer bevorzugten Ausführungsform organische Bindemittel, enthaltend oder bestehend aus Acrylathomopolymeren, Acrylatcopolymeren, insbesondere Styrolacrylatcopolymeren und/oder Copolymeren aus Acrylaten und Methacrylaten, Ethylenvinylacetatcopolymeren, Copolymeren aus Ethylen, Vinylacetat und Methyl(meth)acrylat, insbesondere aus Ethylen, Vinylacetat und Methylmethacrylat, Vinylchloridpolymeren, einem Hybridpolymer auf Basis von amorphem Siliciumdioxid, insbesondere auf der Basis von amorphem Siliciumdioxid und mindestens einem Homo- oder Copolymeren aus Acrylaten und/oder Methacrylaten, Siliconharz-modifizierten Polysiloxanen, Polyurethanen oder beliebigen Mischungen der genannten Bindemittel. Geeignete Acrylat- und Polyurethanbindemittel verfügen in einer zweckmäßigen Ausgestaltung über eine Molmasse im Bereich von 300.000 g/mol und darüber. Das organische Bindemittel wird in einer besonders zweckmäßigen Ausgestaltung in Form einer wässrigen Bindemitteldispersion eingesetzt.

In einer weiteren Ausführungsform verfügt die erfindungsgemäße Dispersionsmasse über mindestens ein anorganisches, insbesondere mineralisch nicht-hydraulisches, Bindemittel, z.B. Wasserglas. Geeignete Wasserglastypen umfassen Natrium-, Kalium- und Lithiumwasserglas, wobei Kaliumwasserglas bevorzugt ist. In einer bevorzugten Ausführungsform weisen erfindungsgemäße Dispersionsmassen keine mineralischen hydraulischen Bindemittel auf, insbesondere keine zementhaltigen Bindemittel.

Der Gewichtsanteil des organischen Bindemittels, als Feststoff bezogen auf das Gesamtgewicht der Dispersionsmasse, liegt bevorzugt im Bereich von 3 bis 30 Gewichtsprozent und besonders bevorzugt im Bereich von 5 bis 20 Gewichtsprozent.

Für die erfindungsgemäßen Dispersionsmassen setzt man bevorzugt Fasermaterial ein, das ausgewählt ist aus der Gruppe bestehend aus anorganischen Fasern, Naturfasern, und synthetischen Fasern oder beliebigen Mischungen der genannten Fasern. Geeignete anorganische Fasern sind Glasfasern. Geeignete Naturfasern sind Zellulosefasern. Geeignete synthetische Fasern sind Carbonfasern und/oder Polyacrylnitrilfasern. Besonders geeignete Dispersionsmassen erhält man bei Verwendung von Glasfasern und Zellulosefasern sowie gegebenenfalls Carbonfasern als Fasermaterial. Unter ge eignete Fasermaterialien im Sinne der vorliegenden Erfindung sollen sowohl Naturfasern wie auch synthetische Fasern, z.B. künstliche Mineralfasern und Textilfasern verstanden werden. Geeignete Naturfasern können aus den Mineralien Econit, Attapulgit, Sepiolith und Wollastonit basieren. Pflanzliche Naturfasern können zurückgehen auf Baumwolle, Cellulose, Flachs, Hanf, Kokos, Sisal und Bambus. Künstliche Mineralfasern lassen sich unterteilen in polykristalline Fasern und Einkristallfasern. Polykristalline Fasern umfassen z.B. Carbonfasern, Aluminiumoxidfasern und Metallfasern. Einkristallfasern basieren z.B. auf Siliziumcarbid, Siliziumnitrid, Borcarbid, Bornitrid sowie Basalt. Unter künstliche amorphe Mineralfasern fallen im Grunde auch Glasfasern. Geeignete synthetische Fasern umfassen ferner Polyesterfasern, Polyamidfasern, Polyacrylatfasern, Polyarcrylnitrilfasern, Polypropylenfasern, Carbo-Nano-Tubes (CNT), und regenerierte Cellulosefasern.

Der Gewichtsanteil der Fasern, bezogen auf das Gesamtgewicht der Dispersionsmasse, liegt im Allgemeinen im Bereich von 0,05 bis 5,0 Gewichtsprozent, vorzugsweise im Bereich von 0,1 bis 1,5 Gewichtsprozent und besonders bevorzugt im Bereich von 0,2 bis 1,2 Gewichtsprozent. In einer Ausführungsform kann der Faseranteil auch im Bereich von 0,1 bis 1,0 Gewichtsprozent liegen. Der Gewichtsanteil an Glasfasern wird dabei bevorzugt derart gewählt, dass er im Bereich von 0,05 bis 1,0 Gewichtsprozent, vorzugsweise im Bereich von 0,1 bis 0,7 Gewichtsprozent und besonders bevorzugt im Bereich von 0,2 bis 0,3 Gewichtsprozent liegt. Bei Einsatz bzw. Mitverwendung von Glasfasern hat sich eine besonders ausgeprägte Verarbeitungsfreundlichkeit der erfindungsgemäßen Dispersionsmassen gezeigt. Der Gewichtsanteil an Zellulosefasern liegt bevorzugt im Bereich von 0,05 bis 3 Gewichtsprozent, vorzugsweise im Bereich von 0,1 bis 2 Gewichtsprozent und besonders bevorzugt im Bereich von 0,2 bis 0,5 Gewichtsprozent, jeweils bezogen auf das Gesamtgewicht der Dispersionsmasse. Der Gewichtsanteil an Carbonfasern sollte üblicherweise einen Wert von 1,0 Gewichtsprozent, vorzugsweise von 0,6 Gewichtsprozent, beispielsweise 0,5 Gewichtsprozent, nicht überschreiten. In einer Ausführungsform kann der Gewichtsanteil an Carbonfasern im Bereich von 0,005 Gewichtsprozent bis 0,1 Gewichtsprozent liegen. Geeignete Fasern verfügen regelmäßig über eine mittlere Länge im Bereich von 2 mm bis 12 mm, vorzugsweise im Bereich von 3 mm bis 8 mm oder 4 bis 6 mm. Es hat sich gezeigt, dass die mechanische Belastbarkeit, insbesondere die Stoßfestigkeit der mit den erfindungsgemäßen Dispersionsmassen zugänglichen Putzbeschichtungen dann besonders ausgeprägt und vorteilhaft ist, wenn neben den Polymerschaumpartikeln und den Leichtfüllstoffen ebenfalls das geschilderte Fasermaterial in Form von Schnittfasern zugegen ist.

Die erfindungsgemäßen Dispersionsmassen sind ferner mit mindestens einem Leichtfüllstoff ausgestattet. Die erfindungsgemäßen Leichtfüllstoffe sind ausgewählt aus der Gruppe bestehend aus Blähglas, z.B. Blähglasgranulat; geblähten vulkanischen Gesteinen, insbesondere Perlite; Blähton; Blähschiefer; Glasbeton; Schaumglas; porösem Vulkangestein, insbesondere Bims; Flugasche; Kesselsand; geblähtem Vermiculit; silikatischen Mikrohohlkugeln; expandierten Aluminiumsilikaten; amorphen Aluminiumsilikaten; Calciumsilikathydraten; Schichtsilikaten; Silikat-Aerogelen; Korkpartikeln, oder beliebigen Mischungen der genannten Leichtfüllstoffe. In einer weiteren Ausführungsform enthält die erfindungsgemäße Dispersionsmasse keine Hohlglaskugeln. Unter Leichtfüllstoffen im Sinne der vorliegenden Erfindung sollen Leichtfüllstoffe mit einer Dichte kleiner oder gleich 600 g/l verstanden werden. Besonders geeignete Leichtfüllstoffe verfügen über eine Dichte kleiner oder gleich 500 g/l. Zweckmäßigerweise greift man auch auf Leichtfüllstoffe mit einer Dichte im Bereich von 50 bis 500 g/l zurück. Besonders vorteilhaft sind auch Leichtfüllstoffe mit einem gemittelten Partikeldurchmesser (d50-Wert) im Bereich von 1 µm bis 500 µm, bevorzugt im Bereich von 5 µm bis 300 µm und besonders bevorzugt im Bereich von 10 µm bis 200 µm. Beispielsweise können in einer Ausgestaltung Leichtfüllstoffe, z.B. geblähtes bzw. expandiertes Vulkangestein, mit einer durchschnittlichen Teilchengröße (d50-Wert) im Bereich von 20 bis 100 µm verwendet werden. Der Gewichtsanteil der Leichtfüllstoffe, bezogen auf das Gesamtgewicht der Dispersionsmasse, liegt in einer zweckmäßigen Ausführungsform im Bereich von 0,5 bis 6 Gewichtsprozent, insbesondere im Bereich von 1,0 bis 5,0 Gewichtsprozent und besonders bevorzugt im Bereich von 2,0 bis 4,5 Gewichtsprozent. Durch die Kombination der Polymerschaumpartikel mit den Leichtfüllstoffen gelangt man zu einer sehr homogenen Dispersionsmasse, die zu besonders leicht verarbeitbaren Putzmassen führt. Besonders gute Resultate stellen sich in diesem Zusammenhang bei Verwendung von im Wesentlichen kugelförmigen Polymerschaumpartikeln ein. Mit den erfindungsgemäßen Dispersionsmassen, in denen die vorangehend genannten Polymerschaumpartikel und die genannten Leichtfüllstoffe gleichzeitig vorliegen, erhält man zudem eine gute Haftung an üblicherweise verwendeten Untergründen.

Die erfindungsgemäße Dispersionsmasse verfügt ferner über mindestens einen weiteren Füllstoff. Dieser weitere Füllstoff ist kein Leichtfüllstoff im Sinne der vorliegenden Erfindung und verfügt über eine Dichte größer 600 g/l. Für die weiteren Füllstoffe kann z.B. zurückgegriffen werden auf Kaolin, Calciumcarbonat, Dolomit, Ton, Kreide, Talkum, Glimmer, Quarzmehl und/oder Quarzsand. Der Gewichtsanteil der weiteren Füllstoffe, bezogen auf das Gesamtgewicht der Dispersionsmasse, liegt vorzugsweise im Bereich von 20 bis 65 Gewichtsprozent, vorzugsweise im Bereich von 35 bis 55 Gewichtsprozent.

Erfindungsgemäß ist die gemittelte Partikelgröße der Polymerschaumpartikel (d50-Wert) größer als die gemittelte Partikelgröße des Leichtfüllstoffs (d50-Wert). Erfindungsgemäß ist die gemittelte Partikelgröße der Polymerschaumpartikel (d50-Wert) auch größer als die gemittelte Partikelgröße des weiteren Füllstoffs (d50-Wert). Indem man die Partikelgrößen der Polymerschaumpartikel größer wählt als die Dicke der Leichtfüllstoffe und auch als die Dicke der weiteren Füllstoffe, lässt sich mit Hilfe dieser Polymerschaumpartikel eine Mindestdicke der aufzutragen Putzbeschichtung herstellen. Außerdem wird über die gesamte Fläche, die mit der Putzbeschichtung zu versehen ist, ein sehr gleichmäßiger Materialauftrag sichergestellt. Die Polymerschaumpartikel fungieren diesem Fall als so genanntes Stützkorn.

Des Weiteren kann vorgesehen sein, dass die erfindungsgemäße Dispersionsmasse ferner mindestens ein Verdickungsmittel, auch Verdicker genannt, enthält. Geeignete Verdickungsmittel umfassen sowohl anorganische Verdicker als auch organische Verdicker und auch deren Mischungen. Geeignete organische Verdicker umfassen z.B. Polysaccharid-Verdicker wie Xanthanverdicker und Guarverdicker, Verdicker auf der Basis von Cellulosederivaten, wie Carboxymethylcellulose, Hydroxyethylcellulose, Methylcellulose, Hydroxypropylmethylcellulose, Ethylhydroxyethylcellulose sowie hydrophob modifizierte Cellulosederivate (zum Beispiel HEER). Ferner umfassen organische Verdicker Acrylatverdicker, zum Beispiel alkaliquellbare Dispersionen, oder hydrophob modifizierte, alkaliquellbare Dispersionen, sowie sogenannte Polyuarethanverdicker, zum Beispiel hydrophob modifizierte, polyetherbasierte Polyurethane. Als geeignete anorganische Verdicker kommen zum Beispiel solche der Klasse der Bentone (Al-Mg-Schichtsilikate) wie Bentonit, Hectorit, Smectit und Attapulgit, wie auch sogenannte Metallorganyle wie gelbildende

Titanate und Zirkonate in Frage. Geeignete Verdicker auf Acrylat- und Polyurethanbasis verfügen geeigneter Weise über Molmassen kleiner 300.000 g/mol. Das Molekulargewicht von Polyurethanverdickern liegt regelmäßig unter dem Molekulargewicht von Arcrylatverdickem. Geeignete Polyurethanverdicker können über ein Molekulargewicht im Bereich von 5.000 bis 50.000 g/mol, vorzugsweise von 7.000 bis 20.000 g/mol, beispielsweise etwa 10.000 g/mol verfügen. Geeignete Acrylatverdicker können über ein Molekulargewicht im Bereich von 50.000 bis 200.000 g/mol, vorzugsweise von 75.000 bis 150.000 g/mol, beispielsweise etwa 100.000 g/mol verfügen. Selbstverständlich können auch beliebige Mischungen der vorangehend genannten Verdickungsmittel eingesetzt werden. Informationen zu geeigneten Verdickungsmitteln kann der Fachmann zum Beispiel auch der Monographie "Dispersionen für Bautenfarben", ISBN 3-87870-720-7, entnehmen. Der Gewichtsanteil des mindestens einen Verdickungsmittels, bezogen auf das Gesamtgewicht der Dispersionsmasse, liegt bevorzugt im Bereich von 0,05 bis 3,0 Gewichtsprozent und besonders bevorzugt im Bereich von 0,7 bis 1,5 Gewichtsprozent.

Es kann mitunter zweckdienlich sein, die erfindungsgemäßen Dispersionsmassen ebenfalls mit mindestens einem Flammschutzmittel auszustatten, insbesondere falls dies zum Erreichen einer gewünschten Brandklasse erforderlich ist. Diese können in den Dispersionsmassen geeigneter Weise in Mengen bis zu 25 Gewichtsprozent, beispielsweise im Bereich von 1 bis 25 Gewichtsprozent, vorzugsweise im Bereich von 8 bis 20 Gewichtsprozent und besonders bevorzugt im Bereich von 10 bis 15 Gewichtsprozent, vorliegen.

Die erfindungsgemäßen Dispersionsmassen können darüber hinaus auch mindestens ein Netz- bzw. Dispergiermittel und/oder mindestens ein Konservierungsmittel und/oder mindestens ein Farbmittel und/oder mindestens ein Entschäumungsmittel aufweisen. Geeignete Farbmittel umfassen Farbstoffe oder Pigmente oder beliebige Mischungen an Farbstoffen und Pigmenten. Demgemäß können die erfindungsgemäßen Dispersionsmassen auch farbig eingesetzt werden.

Der Feststoffanteil der erfindungsgemäßen Dispersionsmasse liegt vorteilhafter Weise im Bereich von 30 Gewichtsprozent bis 80 Gewichtsprozent, insbesondere im Bereich von 40 Gewichtsprozent bis 70 Gewichtsprozent und besonders bevorzugt im Bereich von 50 Gewichtsprozent bis 60 Gewichtsprozent.

In einer bevorzugten Ausführungsform der erfindungsgemäßen Dispersionsmasse ist vorgesehen, dass der Gewichtsanteil des organischen Bindemittels, als Feststoff bezogen auf das Gesamtgewicht der Dispersionsmasse, im Bereich von 3 bis 30 Gewichtsprozent, vorzugsweise im Bereich von 5 bis 20 Gewichtsprozent, liegt,
dass der Gewichtsanteil der Fasern, bezogen auf das Gesamtgewicht der Dispersionsmasse, im Bereich von 0,05 bis 5,0 Gewichtsprozent, vorzugsweise im Bereich von 0,1 bis 1,5 Gewichtsprozent, liegt,
dass der Gewichtsanteil der Leichtfüllstoffe, bezogen auf das Gesamtgewicht der Dispersionsmasse, im Bereich von 0,5 bis 6 Gewichtsprozent, vorzugsweise im Bereich von 1,0 bis 5,0 Gewichtsprozent und besonders bevorzugt im Bereich von 2,0 bis 4,5 Gewichtsprozent liegt,
dass der Gewichtsanteil der weiteren Füllstoffe, bezogen auf das Gesamtgewicht der Dispersionsmasse, im Bereich von 20 bis 65 Gewichtsprozent, vorzugsweise im Bereich von 35 bis 55 Gewichtsprozent, liegt,
dass der Gewichtsanteil der Polymerschaumpartikel, bezogen auf das Gesamtgewicht der Dispersionsmasse, im Bereich von 0,05 bis 1,0 Gewichtsprozent, vorzugsweise im Bereich von 0,1 bis 0,8 Gewichtsprozent und besonders bevorzugt im Bereich von 0,2 bis 0,5 Gewichtsprozent, liegt,
dass der Gewichtsanteil des Flammschutzmittels im Bereich von 1 bis 25 Gewichtsprozent, vorzugsweise im Bereich von 8 bis 20 Gewichtsprozent und besonders bevorzugt im Bereich von 10 bis 15 Gewichtsprozent, und/oder
dass der Gewichtsanteil des mindestens einen Verdickungsmittels, bezogen auf das Gesamtgewicht der Dispersionsmasse, im Bereich von 0,05 bis 3,0 Gewichtsprozent, vorzugsweise im Bereich von 0,7 bis 1,5 Gewichtsprozent, liegt.

Die erfindungsgemäßen Dispersionsmassen können als Putzmasse oder als Bestandteil einer Putzmasse verwendet werden. Die erfindungsgemäße Dispersionsmasse kann auf einer Vielzahl an Untergründen wie zum Beispiel Beton, Beton mit Anstrich, tragfähigem Mauerwerk, Wärmedämmplatten, tragfähigen Altputzschichten oder Holz aufgetragen werden. Neben der Verwendung als Putzbeschichtung kann die erfindungsgemäße Dispersionsmasse auch für das Ausspachteln von Rissen in Putzbeschichtungen verwendet werden. Auch ist es möglich, mit Hilfe der erfindungsgemäßen Dispersionsmasse Dämmeinheiten für WDV-Systeme, beispielsweise aus Schaumstoffprodukten, mineralischen Dämmmaterialien oder Fasermaterialien, an Wandflächen zu verkleben.

Die Herstellung der erfindungsgemäßen Dispersionsmassen ist dem Fachmann mit Hilfe bekannter Werkzeuge ohne weiteres möglich. In der Regel können die erfindungsgemäßen Dispersionsmassen wie hergestellt bzw. wie angeliefert an der Baustelle eingesetzt und an z.B. einer Wand angebracht werden. Zuweilen kann die Dispersionsmasse vor der Applikation umgerührt werden. Auch ist es möglich, die im Grunde applikationsfertige Masse kurz vor der Applikation mit einer geringen Menge an Wasser zu verrühren.

Die der Erfindung zu Grunde liegende Aufgabe wird des Weiteren gelöst durch ein Putzschichtsystem, insbesondere in Form eines Unter- oder Zwischenputzes, erhalten durch Spritz- und/oder Spachtelauftrag der erfindungsgemäßen Dispersionsmasse. Dabei kann in dieses Putzschichtsystem mindestens ein darin eingebettetes oder aufliegendes Armierungsgewebe vorgesehen sein. Gemäß einer weiteren Ausgestaltung des erfindungsgemäßen Putzschichtsystems kann dieses ferner mindestens einen auf der Dispersionsmasse und/oder dem Armierungsgewebe aufliegenden Oberputz umfassen. In dem Fall, in dem auf die Putzschicht aus der erfindungsgemäßen Dispersionsmasse ein Oberputz aufgetragen wird, spricht man bei dieser Putzschicht häufig auch von einem sogenannten Unter- oder Zwischenputz. Der Oberputz kann aus konventionellen Putzmassen, wie sie für Oberputze üblich sind, gefertigt sein. Das erfindungsgemäße Putzschichtsystem umfasst somit sowohl eine einzelne Putzschicht bzw. Putzbeschichtung aus der oder umfassend die erfindungsgemäße Dispersionsmasse, als auch ein System aus zwei oder mehreren Putzschichten, von denen mindestens eine aus der erfindungsgemäßen Dispersionsmasse gefertigt ist bzw. diese umfasst. Selbstverständlich sind auch solche Putzschichtsysteme möglich, die zwei oder mehrere Putzschichten aus der erfindungsgemäßen Dispersionsmasse umfassen. Diese können benachbart aufeinander aufgebracht sein oder durch eine Schicht aus einem anderen Material voneinander getrennt sein. Die erfindungsgemäßen Putzschichtsysteme können im Sinne der Erfindung auch als Putzschichten bezeichnet werden.

In einer besonders zweckmäßigen Ausgestaltung der erfindungsgemäßen Putzschicht verfügt die aus der erfindungsgemäßen Dispersionsmasse gebildete Putzbeschichtung, gegebenenfalls enthaltend das Armierungsgewebe, über eine durchschnittliche Dicke im Bereich von 1 bis 5 mm, vorzugsweise im Bereich von 2 bis 4 mm, beispielsweise etwa 3 mm, unter der hierauf vorliegende Oberputz über eine durchschnittliche Dicke im Bereich von 1 bis 6 mm, vorzugsweise im Bereich von 1,5 bis 3 mm, beispielsweise etwa 2 mm. Das Armierungsgewebe wird in einer vorteilhaften Ausgestaltung in dem Bereich der aus der erfindungsgemäßen Dispersionsmasse gebildeten Putzschicht angeordnet, der der Sichtseite benachbart ist. Besonders geeignet liegt das Armierungsgewebe somit, von der Sichtseite betrachtet, im vorderen Drittel der aus der erfindungsgemäßen Dispersionsmasse gebildeten Putzbeschichtung vor. Es hat sich überraschend gezeigt, dass sich durch die Verwendung der Schaumstoffpartikel im Wesentlichen unterbinden lässt, dass das Armierungsgewebe auf dem Untergrund, beispielsweise einer Wärmedämmplatte, unmittelbar aufliegt. Hierdurch wird eine sachgemäße Bearbeitung bereits materialbedingt sichergestellt. Vorzugsweise werden benachbarte Armierungsgewebebahnen überlappend verlegt. Überraschenderweise kommt es im Bereich der überlappenden Verlegung trotz der Anwesenheit der Schaumstoffpartikel nicht zu einem ausgeprägten, auf der fertigen Putzschicht erkennbaren Materialauftrag. Vielmehr wird ein einheitliches Oberflächenbild erhalten.

Die erfmdungsgemäßen Putzschichten können relativ dünn ausgeführt werden. Beispielsweise kann die durchschnittliche Dicke der erfindungsgemäßen Putzschicht im Bereich von 1 bis 6 mm oder gar im Bereich von 2 bis 4 mm liegen. Hierdurch wird nicht nur eine Materialersparnis bewirkt, auch geht der Trocknungsvorgang zügiger vonstatten.

Eine erfindungsgemäße Putzschicht enthaltend ein Armierungsgewebe kann zum Beispiel dadurch erhalten werden, dass man zunächst die erfindungsgemäße Dispersionsmasse auf einem Untergrund aufträgt, beispielsweise einer Wärmedämmeinheit wie einer Dämmplatte, und anschließend die erhaltene pastöse Schicht mit Hilfe eines Zahnrakels aufzahnt. In die derart bearbeitete Schicht wird das Armierungsgewebe eingedrückt. Anschließend kann die erhaltene Putzschicht glattgezogen werden.

Geeignete Armierungsgewebe sind dem Fachmann bekannt. Üblicherweise verfügen derartige geeignete Armierungsgewebe über eine durchschnittliche Maschenweite im Bereich von 0,3 cm bis 1,0 cm, vorzugsweise im Bereich von 0,3 cm bis 0,8 cm, besonders geeignet im Bereich von 0,4 - 0,6 cm. Als geeignete Armierungsgewebe können zum Beispiel Glasfasergewebe verwendet werden. Als Armierungsgewebe können in einer zweckmäßigen Ausgestaltung im Allgemeinen solche verwendet werden, die über ein Flächengewicht im Bereich von z.B. 80 bis 350 g/m2, vorzugsweise im Bereich von 100 bis 200 g/m2 und besonders bevorzugt im Bereich von 120 bis 180 g/m2 verfügen. Interessanterweise hat sich gezeigt, dass sich bei Verwendung der erfindungsgemäßen Dispersionsmassen Putzschichten mit besonders ausgeprägter Schlagfestigkeit auch dann erhalten lassen, wenn man Armierungsgewebe mit relativ geringem Flächengewicht in diese einbettet.

In einer weiteren Ausführungsform der erfindungsgemäßen Putzschicht verfügt diese über eine Putzbeschichtung, auch erster Unterputz oder Zwischenputz genannt, gebildet aus der erfindungsgemäßen Dispersionsmasse, in die vorzugsweise ein erstes Armierungsgewebe eingebettet ist, sowie über mindestens eine sich hieran anschließende weitere Putzbeschichtung aus der erfindungsgemäßen Dispersionsmasse, auch zweiter Unterputz genannt, in die vorzugsweise ebenfalls ein Armierungsgewebe, auch zweites Armierungsgewebe genannt, eingebettet ist. In einer zweckmäßigen Ausgestaltung wird auf der vorangehend geschilderten Putzbeschichtung ein Oberputz aufgetragen.

Selbstverständlich ist es auch möglich, auf der Putzschicht einen Farbanstrich vorzusehen.

Die der Erfindung zu Grunde liegende Aufgabe wird des Weiteren gelöst durch ein Wärmedämmverbundsystem, umfassend eine Wärmedämmeinheit, insbesondere eine Wärmedämmplatte, mit einer beschichtbaren Oberfläche und mindestens eine an dieser beschichtbaren Oberfläche an- oder aufliegende erfindungsgemäße Putzschicht. Hierbei kann in einer zweckmäßigen Ausgestaltung vorgesehen sein, dass die Wärmedämmeinheit eine Wärmedämmeinheit aus geschäumten Polymeren bzw. Schaumstoffprodukten und/oder Fasermaterial darstellt oder umfasst. Hierbei können geeignete Schaumstoffprodukte ausgewählt sein aus der Gruppe bestehend aus Schaumglas, expandierten Styrolpolymeren, insbesondere expandiertem Polystyrol, expandiertem Polypropylen, Elastomerschaum, Polyisocyanuratschaum, Polyethylenschaum, Phenolharzschaum, Polyurethanhartschaum, Harnstoff-Formaldehydharzschaum, extrudierten Styrolpolymeren, insbesondere extrudiertem Polystyrolschaum, expandiertem Kork oder einer beliebigen Mischung dieser Komponenten. Geeignete Wärmedämmeinheiten können auch auf hydrophobierter Kieselsäure oder hydrophobierten Aerogelen basieren.

Geeignete Faserstoffe können z.B. ausgewählt werden aus der Gruppe bestehend aus Mineralwolle, Kunststofffasern, hydrophob ausgerüstete Holzfasern, insbesondere Holzweichfasern, Holzwolle, Baumwolle und Zellulosefasern bzw. Bestandteilen hiervon oder deren beliebigen Mischungen. Besonders bevorzugt wird auf geschäumte Styrolpolymerisate, vorzugsweise EPS-Dämmplatten, mineralische Wärmedämmplatten und/oder Naturfaserdämmstoffplatten, insbesondere Hanfdämmplatten, zurückgegriffen. Selbstverständlich können auch Verbundsysteme, enthaltend mindestens zwei voneinander verschiedene Wärmedämmeinheiten, wie beispielsweise vorangehend ausgeführt, verwendet werden. Diese können zum Beispiel in einer Sandwich-Ausführungsform vorliegen.

Mit dem erfindungsgemäßen Wärmedämmverbundsystem können Gebäude oder Teile davon, beispielsweise Außenfassaden, verkleidet werden.

Mit den erfindungsgemäßen Putzschichten bzw. Putzschichtsystemen erreicht man eine sehr ausgeprägte mechanische Festigkeit, beispielsweise gegen Stoß- bzw. Schlagbelastungen. Derartige Beanspruchungen können mit Hilfe der ETAG-Richtlinie 004, Ziffer 5.1.3.3.1 geprüft werden. Es hat sich herausgestellt, dass mit den erfindungsgemäßen Putzschichten bzw. Putzschichtsysteme mit dem genannten Belastungstest selbst bei einem Energieeintrag von 80 Joule keine Rissbildung beobachtet wird und somit noch stets eine Einordnung in die Kategorie I gelingt. Herkömmliche Putzbeschichtungen, wie sie regelmäßig für Fassaden verwendet werden, erlauben in der Regel nur, Rissbildung bei Belastungen bis 20 Joule auszuschließen.

Der vorliegenden Erfindung lag die überraschende Erkenntnis zu Grunde, dass sich mit den erfindungsgemäßen Dispersionsmassen verbesserte Spachtelmassen insbesondere für den WDVS-Bereich erhalten lassen. Die mit den erfindungsgemäßen Dispersionsmassen erhältlichen Putzbeschichtungen zeichnen sich durch eine sehr hohe Stoßfestigkeit aus. Diese liegt im Allgemeinen signifikant oberhalb der Festigkeit, die sich mit herkömmlichen Putzbeschichtungen, beispielsweise solchen, die bei Außenfassaden zum Einsatz kommen, erhalten lassen. Hiermit einher geht eine signifikante Verlängerung der Sanierungsintervalle. Somit werden mit den erfindungsgemäßen Dispersionsmassen Putzbeschichtungen zur Verfügung gestellt, die sich durch eine besonders ausgeprägte Widerstandsfähigkeit gegenüber impulsartig eingebrachten Kräften auszeichnen. Von praktischer Seite interessant ist auch, dass sich die erhöhten Schlagfestigkeiten bereits mit sehr dünnen Putzbeschichtungen aus den erfindungsgemäßen Dispersionsmassen erhalten lassen. Beispielsweise sind die vorteilhaften Eigenschaften schon mit Schichtdicken der erfindungsgemäßen Putzschichten, die auf die erfindungsgemäßen Dispersionsmassen zurückgehen, im Bereich von 1 bis 3 mm, beispielsweise im Bereich von 2 mm darstellbar. Gleichzeitig gelingt es, die Dichte solcher Putzmassen zu verringern. Hierdurch wird das Handling von Gebinden enthaltend die Dispersionsmassen beträchtlich erleichtert. Es muss auch nicht mehr, wie sonst üblich, bei mechanischer Beanspruchung sogleich mit einem Materialabtrag oder einer irreversiblen Materialstauchung gerechnet werden. Als besonders überraschend hat sich auch herausgestellt, dass sich die erhöhte mechanische Belastbarkeit selbst bei relativ geringen Dicken der erhaltenen Putzbeschichtungen einstellt. Von Vorteil bei den erfindungsgemäßen Dispersionsmassen ist ferner, dass sich daraus Putzbeschichtungen erhalten lassen, die keine Spannungsrisse mehr bilden bzw. Spannungsrisse nur noch in einem weitaus geringeren Umfang bilden, als dieses von herkömmlichen Putzbeschichtungen bekannt ist, und zwar selbst ohne Verwendung eines in die Putzschicht eingebetteten Armierungsgewebes.

Als weiterer Vorteil der erfindungsgemäßen Putzschicht hat sich herausgestellt, dass auf diese Putzschicht aufzutragende Folgeschichten, beispielsweise Oberputze besonders leicht zu applizieren sind.

Die erfindungsgemäßen Dispersionsmassen zeichnen sich ferner dadurch aus, dass auch während längerer Stand- bzw. Lagerungszeiten keine Entmischung stattfindet. Insbesondere werden auch die Schaumstoffpartikel nicht aufgeschwemmt.

Die Prüfung der Stoßfestigkeit der erfindungsgemäßen Putzschichten kann gemäß ETAG-Richtlinie 004, Ziffer 5.1.3.3.1 durchgeführt werden. Beispielsweise kann eine solche Prüfung an einem erfindungsgemäßen Wärmedämmverbundsystem vorgenommen werden, umfassend eine Dämmeinheit, beispielsweise eine EPS-Dämmplatte, eine Putzschicht aus einer erfindungsgemäßen Dispersionsmasse, in die ein Glasfasergewebe eingebettet worden ist, und hierauf angebracht einen Oberputz. Vor der Messung der Stoßfestigkeit hat es sich als zweckmäßig erwiesen, den Probekörper zu konditionieren (28 Tage Normklima (23 +/- 2 Grad Celsius), anschließend sieben Tage Unterwasserlagerung, anschließend sieben Tage Trocknung durch Lagerung bei Raumtemperatur (23 +/- 2 Grad Celsius). Der Belastungstest kann mit einer 4,2 kg schweren Stahlkugel vorgenommen werden. Mit der beschriebenen Prüfung kann ermittelt werden, bis zu welcher mechanischen Belastung keine Risse auftreten.

Ein gemäß obiger Vorgabe erhaltener Prüfkörper (100 cm x 50 cm) wurde nach der ETAG-Richtlinie 004 (5.1.3.3.) getestet. Hierzu hat man eine 4,2 kg schwere Stahlkugel aus unterschiedlichen Fallhöhen auf den Prüfkörper einwirken lassen. Unter Verwendung der erfindungsgemäßen Dispersionsmassen erhaltene Prüfkörper zeigten keine Rissbildung (einhergehend mit einer Einstufung in die Klasse I gemäß ETAG-Richtlinie 004, Ziffer 5.1.3.3.) bis zu einem Energieeintrag von 80 Joule. D.h. erst bei Energieeinwirkung oberhalb von 80 Joule zeigte sich Rissbildung in der Oberfläche. Mit vergleichbaren gattungsgemäßen Systemen ließ sich Rissbildung allenfalls bis zu einem Energieeintrag von 25 Joule vermeiden.

Weitere Merkmale und Vorteile der Erfindung ergeben sich aus der nachgehenden Beschreibung, in der bevorzugte Ausführungsformen der Erfindung beispielhaft anhand einer schematischen Zeichnung erläutert sind. Dabei zeigt:

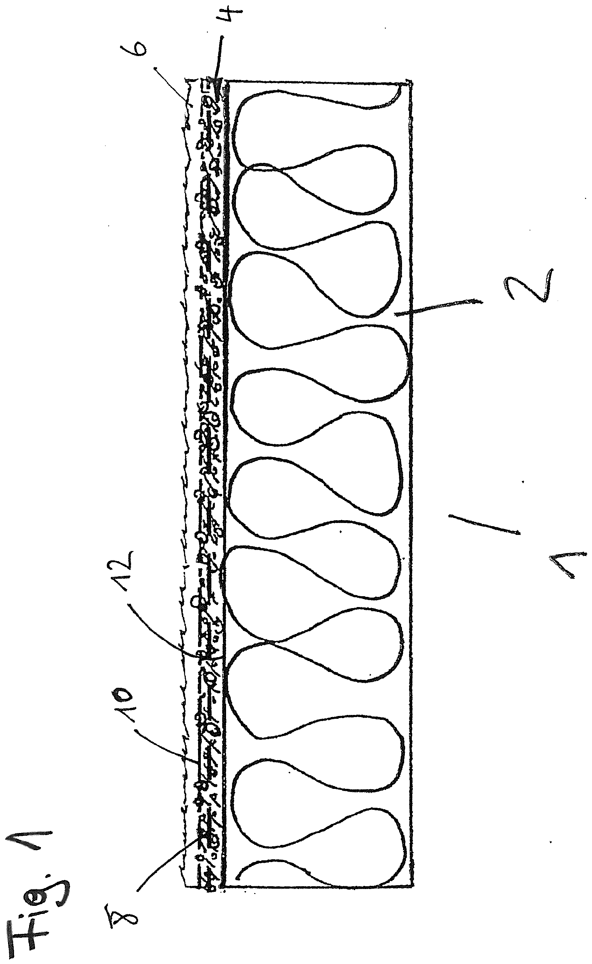

- Figur 1:: Eine schematische Querschnittszeichnung eines erfindungsgemäßen Wärmedämmverbundsystems.

Das erfindungsgemäße Wärmedämmverbundsystem 1 setzt sich zusammen aus einer Wärmedämmeinheit 2, beispielsweise in Form einer Polymerschaumplatte, z.B. EPS-Dämmplatte, einem Unterputz 4 und einem Oberputz 6. Der Oberputz 6 kann beispielsweise auch noch mit einem Farbanstrich (nicht abgebildet) versehen sein. Der Unterputz 4 kann unmittelbar auf die Fläche 12 der Wärmedämmeinheit 2 in Form einer erfindungsgemäßen Dispersionsmasse aufgebracht werden. Eingebettet in diese Putzbeschichtung 4 ist ein Glasfaserarmierungsgewebe 8. Dieses befindet sich in der dargestellten Ausführungsform näher beabstandet zu der Oberfläche 10 des Unterputzes 4 als zu der Fläche 12 der Wärmedämmeinheit 2. Der Unterputz 4 kann in der dargestellten Ausführungsform z.B. über eine durchschnittliche Dicke im Bereich von 3 mm verfügen. Bei dem Oberputz 6, der im vorliegenden Fall die Endbeschichtung darstellt, kann es sich um einen so genannten Strukturputz handeln. Derartige Endbeschichtungen sind dem Fachmann bekannt. Die durchschnittliche Dicke dieses Oberputzes 6 kann z.B. etwa 2 mm betragen.

Wird ein Prüfkörper auf der Basis des vorangehend beschriebenen erfindungsgemäßen Wärmedämmverbundsystems 1 einer Prüfung gemäß ETAG 004 (Ziffer 5.1.3.3.1) ausgesetzt, kann z.B. in einer Ausführungsform bis zu einem Energieeintrag von 80 Joule Rissbildung verhindert werden.

Die in der vorstehenden Beschreibung, in den Ansprüchen sowie in den Zeichnungen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Spritz- und/oder spachtelfähige Dispersionsmasse, umfassend
- Polymerschaumpartikel,
- mindestens einen Leichtfüllstoff, wobei die Leichtfüllstoffe eine Dichte kleiner oder gleich 600 g/l aufweisen und ausgewählt sind aus der Gruppe bestehend aus Blähglas; geblähten vulkanischen Gesteinen; Blähton; Blähschiefer; Glasbeton; Schaumglas; porösem Vulkangestein; Flugasche; Kesselsand; geblähtem Vermiculit; silikatischen Mikrohohlkugeln; expandierten Aluminiumsilikaten; amorphen Aluminiumsilikaten; Calciumsilikathydraten; Schichtsilikaten; Silikat-Aerogelen; Korkpartikeln und beliebigen Mischungen der genannten Leichtfüllstoffe,
- mindestens ein Fasermaterial in Form von Schnittfasern,
- mindestens ein organisches Bindemittel,
- mindestens einen weiteren Füllstoff, wobei dieser weitere Füllstoff eine Dichte größer 600 g/l aufweist, und
- Wasser sowie ferner umfassend
- mindestens ein Verdickungsmittel und/oder
mindestens ein Netz- bzw. Dispergiermittel und/oder
mindestens ein Konservierungsmittel und/oder
mindestens ein Flammschutzmittel und/oder
mindestens ein Farbmittel und/oder
mindestens ein Entschäumungsmittel,
wobei die gemittelte Partikelgröße der Polymerschaumpartikel größer ist als die gemittelte Partikelgröße des Leichtfüllstoffs und auch größer als die gemittelte Partikelgröße des weiteren Füllstoffs.

2. Dispersionsmasse nach Anspruch 1, **dadurch gekennzeichnet, dass** die Polymerschaumpartikel auf geschäumten Polyolefinen, insbesondere aus Polyethylen oder Polypropylen, oder geschäumten Styrolpolymerisaten, insbesondere expandiertem Polystyrol (EPS), basieren und/oder dass die Polymerschaumpartikel über einen gemittelten Partikeldurchmesser (d₅₀-Wert) im Bereich von 0,3 mm bis 2,5 mm, vorzugsweise im Bereich von 0,4 mm bis 2,0 mm und besonders bevorzugt von 0,5 mm bis 1,6 mm verfügen.

3. Dispersionsmasse nach Anspruch 1 oder 2, **dadurch gekennzeichnet, dass** das organische Bindemittel enthält Acrylathomopolymere, Acrylatcopolymere, insbesondere Styrolacrylatcopolymere und/oder Copolymere aus Acrylaten und Methacrylaten, Ethylenvinylacetatcopolymere, Copolymere aus Ethylen, Vinylacetat und Methyl(meth)acrylat, insbesondere aus Ethylen, Vinylacetat und Methylmethacrylat, Vinylchloridpolymere, ein Hybridpolymer auf Basis von amorphem Siliciumdioxid, insbesondere auf der Basis von amorphem Siliciumdioxid und mindestens einem Homo- oder Copolymeren aus Acrylaten und/oder Methacrylaten, Siliconharz-modifizierte Polysiloxane, Polyurethan oder beliebige Mischungen der genannten Bindemittel.

4. Dispersionsmasse nach einem der vorangehenden Ansprüche, ferner umfassend mindestens ein anorganisches Bindemittel, insbesondere Wasserglas, und vorzugsweise kein mineralisch hydraulisches Bindemittel.

5. Dispersionsmasse nach einem der vorangehenden Ansprüche, **dadurch gekennzeichnet, dass**
das Fasermaterial ausgewählt ist aus der Gruppe bestehend aus Glasfasern, Zellulosefasern, Carbonfasern und Polyacrylnitrilfasern oder beliebigen Mischungen der genannten Fasern oder dass das Fasermaterial vorzugsweise Glasfasern und Zellulosefasern sowie gegebenenfalls Carbonfasern enthält.

6. Dispersionsmasse nach einem der vorangehenden Ansprüche, **dadurch gekennzeichnet, dass**
das Blähglas Blähglasgranulat darstellt oder dass die geblähten vulkanischen Gesteine Perlite darstellen oder dass das poröse Vulkangestein Bims darstellt.

7. Dispersionsmasse nach einem der vorangehenden Ansprüche, **dadurch gekennzeichnet, dass**
die Leichtfüllstoffe eine Dichte kleiner oder gleich 500 g/l aufweisen sowie bevorzugt im Bereich von 50 bis 500 g/l, und/oder dass
die Leichtfüllstoffe über einen gemittelten Partikeldurchmesser (d50-Wert) im Bereich von 1 µm bis 500 µm, bevorzugt im Bereich von 5 µm bis 300 µm und besonders bevorzugt im Bereich von 10 µm bis 200 µm verfügen.

8. Dispersionsmasse nach einem der vorangehenden Ansprüche, **dadurch gekennzeichnet, dass**
der mindestens eine weitere Füllstoff Kaolin, Calciumcarbonat, Dolomit, Ton, Kreide, Talkum, Glimmer, Quarzmehl und/oder Quarzsand darstellt.

9. Dispersionsmasse nach einem der vorangehenden Ansprüche, **dadurch gekennzeichnet, dass** deren Feststoffanteil im Bereich von 30 Gewichtsprozent bis 80 Gewichtsprozent, vorzugsweise im Bereich von 40 Gewichtsprozent bis 70 Gewichtsprozent und besonders im Bereich von 50 Gewichtsprozent bis 60 Gewichtsprozent liegt.

10. Dispersionsmasse nach einem der vorangehenden Ansprüche, **dadurch gekennzeichnet, dass**
der Gewichtsanteil des organischen Bindemittels, als Feststoff, bezogen auf das Gesamtgewicht der Dispersionsmasse, im Bereich von 3 bis 30 Gewichtsprozent, vorzugsweise im Bereich von 5 bis 20 Gewichtsprozent, liegt,
dass der Gewichtsanteil der Fasern, bezogen auf das Gesamtgewicht der Dispersionsmasse, im Bereich von 0,05 bis 5,0 Gewichtsprozent, vorzugsweise im Bereich von 0,1 bis 1,5 Gewichtsprozent, liegt,
dass der Gewichtsanteil der Leichtfüllstoffe, bezogen auf das Gesamtgewicht der Dispersionsmasse, im Bereich von 0,5 bis 6 Gewichtsprozent, vorzugsweise im Bereich von 1,0 bis 5,0 Gewichtsprozent und besonders bevorzugt im Bereich von 2,0 bis 4,5 Gewichtsprozent liegt,
dass der Gewichtsanteil der weiteren Füllstoffe, bezogen auf das Gesamtgewicht der Dispersionsmasse, im Bereich von 20 bis 65 Gewichtsprozent, vorzugsweise im Bereich von 35 bis 55 Gewichtsprozent, liegt,
dass der Gewichtsanteil der Polymerschaumpartikel, bezogen auf das Gesamtgewicht der Dispersionsmasse, im Bereich von 0,05 bis 1,0 Gewichtsprozent, vorzugsweise im Bereich von 0,1 bis 0,8 Gewichtsprozent und besonders bevorzugt im Bereich von 0,2 bis 0,5 Gewichtsprozent, liegt,
dass der Gewichtsanteil des Flammschutzmittels im Bereich von 1 bis 25 Gewichtsprozent, vorzugsweise im Bereich von 8 bis 20 Gewichtsprozent und besonders bevorzugt im Bereich von 10 bis 15 Gewichtsprozent, und/oder
dass der Gewichtsanteil des mindestens einen Verdickungsmittels, bezogen auf das Gesamtgewicht der Dispersionsmasse, im Bereich von 0,05 bis 3,0 Gewichtsprozent, vorzugsweise im Bereich von 0,7 bis 1,5 Gewichtsprozent,
liegt.

11. Dispersionsmasse nach einem der vorangehenden Ansprüche, **dadurch gekennzeichnet, dass**
der Gewichtsanteil an Glasfasern im Bereich von 0,05 bis 1,0 Gewichtsprozent, vorzugsweise im Bereich von 0,1 bis 0,7 Gewichtsprozent und besonders bevorzugt im Bereich von 0,2 bis 0,3 Gewichtsprozent liegt und dass
der Gewichtsanteil an Zellulosefasern im Bereich von 0,05 bis 5 Gewichtsprozent, vorzugsweise im Bereich von 0,1 bis 2 Gewichtsprozent und besonders bevorzugt im Bereich von 0,2 bis 0,5 Gewichtsprozent liegt, bezogen auf das Gesamtgewicht der Dispersionsmasse.

12. Dispersionsmasse nach einem der vorangehenden Ansprüche, **dadurch gekennzeichnet, dass**
die Fasern über eine mittlere Länge im Bereich von 2 mm bis 12 mm, vorzugsweise im Bereich von 3 mm bis 8 mm, verfügen.

13. Dispersionsmasse nach einem der vorangehenden Ansprüche, **dadurch gekennzeichnet, dass**
diese eine Putzmasse darstellt oder Bestandteil einer Putzmasse ist.

14. Putzschichtsystem, erhalten durch Spritz- und/oder Spachtelauftrag der Dispersionsmasse gemäß einem der vorangehend genannten Ansprüche.

15. Putzschichtsystem nach Anspruch 14, ferner umfassend
mindestens ein darin eingebettetes oder aufliegendes Armierungsgewebe.

16. Putzschichtsystem nach Anspruch 14 oder 15, ferner umfassend mindestens einen auf der Dispersionsmasse und/oder dem Armierungsgewebe aufliegenden Oberputz.

17. Putzschichtsystem nach einem der Ansprüche 14 bis 16, ferner umfassend mindestens einen Farbanstrich.

18. Wärmedämmverbundsystem, umfassend
eine Wärmedämmeinheit, insbesondere eine Wärmedämmplatte, mit einer beschichtbaren Oberfläche und mindestens ein an dieser beschichtbaren Oberfläche an- oder aufliegendes Putzschichtsystem gemäß einem der Ansprüche 14 bis 17,

19. Wärmedämmverbundsystem nach Anspruch 18, **dadurch gekennzeichnet, dass** die Wärmedämmeinheit eine Wärmedämmeinheit aus geschäumten Polymeren, insbesondere geschäumten Styrolpolymerisaten, vorzugsweise eine EPS-Dämmplatte, eine mineralische Wärmedämmplatte, eine Naturfaserdämmstoffplatte, insbesondere eine Hanfdämmplattte, oder ein Verbundsystem, enthaltend mindestens zwei voneinander verschiedene Wärmedämmeinheiten, insbesondere in Sandwich-Ausführung, umfasst oder darstellt.

20. Verwendung der Dispersionsmasse nach einem der Ansprüche 1 bis 13 als Putzmasse oder als Bestandteil einer Putzmasse.

21. Verwendung des Wärmedämmverbundsystems nach Anspruch 18 oder 19 zur Verkleidung von Gebäuden oder Teilen davon.

## Claims

1. A sprayable and/or trowelable dispersion composition, comprising
- polymer foam particles,
- at least one light filler, wherein the light fillers have a density of less than or equal to 600 g/1 and are selected from the group consisting of expanded glass; expanded volcanic rocks; expanded clay; expanded slate; glass concrete; foam glass; porous volcanic rock; flue ash; boiler sand; expanded vermiculite; hollow silica microspheres; expanded aluminum silicates; amorphous aluminum silicates; calcium silicate hydrates; layered silicates; silica aerogels; cork particles and any mixtures of the indicated light fillers,
- at least one fibrous material in the form of cut fibers,
- at least one organic binder,
- at least one additional filler, wherein this additional filler has a density greater than 600 g/l, and
- water, and further comprising
- at least one thickening agent and/or
at least one wetting or dispersing agent and/or
at least one preservative agent and/or
at least one flame retardant and/or
at least one coloring agent and/or
at least one defoaming agent,
wherein the averaged particle size of the polymer foam particles is greater than the averaged particle size of the light filler and also greater than the averaged particle size of the additional filler.

2. The dispersion composition according to Claim 1, **characterized in that** the polymer foam particles are based on foamed polyolefins, in particular made of polyethylene or polypropylene, or foamed styrene polymers, in particular expanded polystyrene (EPS), and/or **in that** the polymer foam particles have an averaged particle diameter (d50 value) in the range of 0.3 mm to 2.5 mm, preferably in the range of 0.4 mm to 2.0 mm and, particularly preferably, of 0.5 mm to 1.6 mm.

3. The dispersion composition according to Claim 1 or 2, **characterized in that** the organic binder contains acrylate homopolymers, acrylate copolymers, in particular styrene acrylate copolymers and/or copolymers of acrylates and methacrylates, ethylene vinyl acetate copolymers, copolymers of ethylene, vinyl acetate and methyl (meth)acrylate, in particular of ethylene, vinyl acetate and methyl methacrylate, vinyl chloride polymers, a hybrid polymer based on amorphous silicon dioxide, in particular based on amorphous silicon dioxide and at least one homopolymer or copolymers of acrylates and/or methacrylates, silicone resin-modified polysiloxanes, polyurethane or any mixtures of the indicated binders.

4. The dispersion composition according to any one of the preceding claims, further comprising at least one inorganic binder, in particular water glass and, preferably, no mineral hydraulic binder.

5. The dispersion composition according to any one of the preceding claims, **characterized in that**
the fibrous material is selected from the group consisting of glass fibers, cellulose fibers, carbon fibers and polyacrylonitrile fibers or any mixtures of the indicated fibers or **in that** the fibrous material preferably contains glass fibers and cellulose fibers as well as, if applicable, carbon fibers.

6. The dispersion composition according to any one of the preceding claims, **characterized in that**
the expanded glass constitutes expanded glass granules or **in that** the expanded volcanic rocks constitute pearlites or **in that** the porous volcanic rock constitutes pumice.

7. The dispersion composition according to any one of the preceding claims, **characterized in that**
the light fillers have a density less than or equal to 500 g/1 and, preferably, in the range of 50 to 500 g/l, and/or
**in that** the light fillers have an average particle diameter (d50 value) in the range of 1 µm to 500 µm, preferably in the range of 5 µm to 300 µm and, particularly preferably, in the range of 10 µm to 200 µm.

8. The dispersion composition according to any one of the preceding claims, **characterized in that**
the at least one additional filler constitutes kaolin, calcium carbonate, dolomite, clay, chalk, talc, mica, quartz powder and/or quartz sand.

9. The dispersion composition according to any one of the preceding claims, **characterized in that**
the solids content thereof lies in the range of 30 percent by weight to 80 percent by weight, preferably in the range of 40 percent by weight to 70 percent by weight and, particularly, in the range of 50 percent by weight to 60 percent by weight.

10. The dispersion composition according to any one of the preceding claims, **characterized in that**
the weight percentage of the organic binder, as solids, based on the total weight of the dispersion composition, lies in the range of 3 to 30 percent by weight, preferably in the range of 5 to 20 percent by weight,
**in that** the weight percentage of the fibers, based on the total weight of the dispersion composition, lies in the range of 0.05 to 5.0 percent by weight, preferably in the range of 0.1 to 1.5 percent by weight,
**in that** the weight percentage of the light fillers, based on the total weight of the dispersion composition, lies in the range of 0.5 to 6 percent by weight, preferably in the range of 1.0 to 5.0 percent by weight and, particularly preferably, in the range of 2.0 to 4.5 percent by weight,
**in that** the weight percentage of the additional fillers, based on the total weight of the dispersion composition, lies in the range of 20 to 65 percent by weight, preferably in the range of 35 to 55 percent by weight,
**in that** the weight percentage of the polymer foam particles, based on the total weight of the dispersion composition, lies in the range of 0.05 to 1.0 percent by weight, preferably in the range of 0.1 to 0.8 percent by weight and, particularly preferably, in the range of 0.2 to 0.5 percent by weight,
**in that** the weight percentage of the flame retardant lies in the range of 1 to 25 percent by weight, preferably in the range of 8 to 20 percent by weight and, particularly preferably, in the range of 10 to 15 percent by weight, and/or
**in that** the weight percentage of the at least one thickening agent, based on the total weight of the dispersion composition, lies in the range of 0.05 to 3.0 percent by weight, preferably in the range of 0.7 to 1.5 percent by weight.

11. The dispersion composition according to any one of the preceding claims, **characterized in that**
the weight percentage of glass fibers lies in the range of 0.05 to 1.0 percent by weight, preferably in the range of 0.1 to 0.7 percent by weight and, particularly preferably, in the range of 0.2 to 0.3 percent by weight and
**in that** the weight percentage of cellulose fibers lies in the range of 0.05 to 5 percent by weight, preferably in the range of 0.1 to 2 percent by weight and, particularly preferably, in the range of 0.2 to 0.5 percent by weight, based on the total weight of the dispersion composition.

12. The dispersion composition according to any one of the preceding claims, **characterized in that**
the fibers have an average length in the range of 2 mm to 12 mm, preferably in the range of 3 mm to 8 mm.

13. The dispersion composition according to any one of the preceding claims, **characterized in that**
said dispersion composition constitutes a plaster or is a constituent of a plaster.

14. A plaster layer system, obtained by a spray and/or trowel application of the dispersion composition according to any one of the previously indicated claims.

15. The plaster layer system according to Claim 14, further comprising at least one reinforcement fabric which is embedded therein or lying thereon.

16. The plaster layer system according to Claim 14 or 15, further comprising at least one top plaster lying on the dispersion composition and/or the reinforcement fabric.

17. The plaster layer system according to any one of Claims 14 to 16, further comprising at least one coat of paint.

18. An external thermal insulation composite system, comprising a thermal insulation unit, in particular a thermal insulation panel, having a coatable surface and at least one plaster layer system resting or lying on said coatable surface according to any one of Claims 14 to 17.

19. The external thermal insulation composite system according to Claim 18, **characterized in that**
the thermal insulation unit comprises or constitutes a thermal insulation unit made of foamed polymers, in particular foamed styrene polymers, preferably an EPS insulation panel, a mineral thermal insulation panel, a natural fiber insulating panel, in particular a hemp insulation panel, or a composite system, containing at least two thermal insulation units which are different from one another, in particular in a sandwich design.

20. Use of the dispersion composition according to any one of Claims 1 to 13 as a plaster or as a constituent of a plaster.

21. Use of the external thermal insulation composite system according to Claim 18 or 19 for cladding buildings or parts thereof.

## Revendications

1. Composition de dispersion injectable et/ou spatulable, comprenant
- des particules de polymère mousse,
- au moins une matière de remplissage légère, dans laquelle les matières de remplissage légères présentent une densité inférieure ou égale à 600 g/1 et sont sélectionnées parmi le groupe constitué de verre expansé ; roches volcaniques expansées ; argile expansée ; ardoise expansée ; béton translucide ; verre cellulaire ; pierres volcaniques poreuses ; cendres volantes ; cendres sous chaudière ; vermiculite expansée ; microbilles creuses de silicate ; silicates d'aluminium expansés ; silicates d'aluminium amorphes ; silicates de calcium hydratés ; phyllosilicates ; aérogels de silice ; particules de liège et des mélanges quelconques des matières de remplissage légères mentionnées,
- au moins un matériau fibreux sous la forme de fibres découpées,
- au moins un liant organique,
- au moins une autre matière de remplissage, dans laquelle cette autre matière de remplissage présente une densité supérieure à 600 g/1, et
- de l'eau ainsi que comprenant encore
- au moins un épaississant et/ou
au moins un agent mouillant respectivement dispersant et/ou
au moins un conservateur et/ou
au moins un retardateur de flamme et/ou
au moins un colorant et/ou
au moins un agent antimoussant,
dans laquelle la taille moyenne des particules de polymère mousse est supérieure à la taille moyenne des particules de la matière de remplissage légère et aussi supérieure à la taille moyenne des particules de l'autre matière de remplissage.

2. Composition de dispersion selon la revendication 1, **caractérisée en ce que** les particules de polymère mousse sont à base de mousses polyoléfines, en particulier à base de polyéthylène ou de polypropylène, ou de mousses polymères styrènes, en particulier du polystyrène expansé (PSE), et/ou que les particules de polymère mousse ont un diamètre moyen de particule (valeur d50) dans la plage de 0,3 mm à 2,5 mm, de préférence dans la plage de 0,4 mm à 2,0 mm et en particulier de préférence de 0,5 mm à 1,6 mm.

3. Composition de dispersion selon la revendication 1 ou 2, **caractérisée en ce que** le liant organique contient des homopolymères d'acrylate, des copolymères d'acrylate, en particulier des copolymères de styrène-acrylate et/ou des copolymères à base d'acrylates et de méthacrylates, des copolymères d'éthylène-acétate de vinyle, des copolymères à base d'éthylène, d'acétate de vinyle et de méthacrylate ou d'acrylate de méthyle, en particulier à base d'éthylène, d'acétate de vinyle et de méthacrylate de méthyle, des polymères de chlorure de vinyle, un polymère hybride à base de dioxyde de silicium amorphe, en particulier à base de dioxyde de silicium amorphe et d'au moins un homopolymère ou de copolymères à base d'acrylates et/ou de méthacrylates, des polysiloxanes à résine de silicone modifiée, du polyuréthane ou des mélanges quelconques des liants mentionnés.

4. Composition de dispersion selon l'une quelconque des revendications précédentes, comprenant en outre au moins un liant anorganique, en particulier du verre soluble, et de préférence aucun liant hydraulique minéral.

5. Composition de dispersion selon l'une quelconque des revendications précédentes, **caractérisée en ce que**
le matériau fibreux est sélectionné parmi le groupe constitué de fibres de verre, de fibres cellulosiques, de fibres de carbone et de fibres polyacrylonitriles ou des quelconques mélanges des fibres mentionnées ou que le matériau fibreux renferme de préférence des fibres de verre, des fibres cellulosiques et, le cas échéant des fibres de carbone.

6. Composition de dispersion selon l'une quelconque des revendications précédentes, **caractérisée en ce que**
le verre expansé constitue des granulés de verre expansé ou que les roches volcaniques expansées constituent de la perlite ou que la pierre volcanique poreuse constitue de la pierre ponce.

7. Composition de dispersion selon l'une quelconque des revendications précédentes, **caractérisée en ce que**
les matières de remplissage légères présentent une densité inférieure ou égale à 500 g/1 ainsi que de préférence dans la plage de 50 à 500 g/l, et/ou que les matières de remplissage légères ont un diamètre moyen de particule (valeur d50) dans la plage de 1 µm à 500 µm, de préférence dans la plage de 5 µm à 300 µm et en particulier de préférence dans la plage de 10 µm à 200 µm.

8. Composition de dispersion selon l'une quelconque des revendications précédentes, **caractérisée en ce que** ladite autre matière de remplissage au moins constitue du kaolin, du carbonate de calcium, de la dolomite, de l'argile, de la craie, du talc, du mica, de la farine de quartz et/ou du sable quartzeux.

9. Composition de dispersion selon l'une quelconque des revendications précédentes, **caractérisée en ce que** sa teneur en matières solides se situe dans la plage de 30 pour cent en poids à 80 pour cent en poids, de préférence dans la plage de 40 pour cent en poids à 70 pour cent en poids et en particulier dans la plage de 50 pour cent en poids à 60 pour cent en poids.

10. Composition de dispersion selon l'une quelconque des revendications précédentes, **caractérisée en ce que** la teneur pondérale du liant organique, en tant que matière solide, par rapport au poids total de la composition de dispersion se situe dans la plage de 3 à 30 pour cent en poids, de préférence dans la plage de 5 à 20 pour cent en poids, que la teneur pondérale des fibres, rapportée au poids total de la composition de dispersion se situe dans la plage de 0,05 à 5,0 pour cent en poids, de préférence dans la plage de 0,1 à 1,5 pour cent en poids,
que la teneur pondérale des matières de remplissage légères, rapportée au poids total de la composition de dispersion se situe dans la plage de 0,5 à 6 pour cent en poids, de préférence dans la plage de 1,0 à 5,0 pour cent en poids et en particulier de préférence dans la plage de 2,0 à 4,5 pour cent en poids,
que la teneur pondérale des autres matières de remplissage, rapportée au poids total de la composition de dispersion se situe dans la plage de 20 à 65 pour cent en poids, de préférence dans la plage de 35 à 55 pour cent en poids,
que la teneur pondérale des particules de polymère mousse, rapportée au poids total de la composition de dispersion se situe dans la plage de 0,05 à 1,0 pour cent en poids, de préférence dans la plage de 0,1 à 0,8 pour cent en poids et en particulier de préférence dans la plage de 0,2 à 0,5 pour cent en poids,
que la teneur pondérale du retardateur de flamme se situe dans la plage de 1 à 25 pour cent en poids, de préférence dans la plage de 8 à 20 pour cent en poids et en particulier de préférence dans la plage de 10 à 15 pour cent en poids, et/ou
que la teneur pondérale dudit épaississant au moins, rapportée au poids total de la composition de dispersion se situe dans la plage de 0,05 à 3,0 pour cent en poids, de préférence dans la plage de 0,7 à 1,5 pour cent en poids.

11. Composition de dispersion selon l'une quelconque des revendications précédentes, **caractérisée en ce que**
la teneur pondérale des fibres de verre se situe dans la plage de 0,05 à 1,0 pour cent en poids, de préférence dans la plage de 0,1 bis 0,7 pour cent en poids et en particulier de préférence dans la plage de 0,2 à 0,3 pour cent en poids et
que la teneur pondérale des fibres cellulosiques se situe dans la plage de 0,05 à 5 0 pour cent en poids, de préférence dans la plage de 0,1 à 2 pour cent en poids et en particulier de préférence dans la plage de 0,2 à 0,5 pour cent en poids, par rapport au poids total de la composition de dispersion.

12. Composition de dispersion selon l'une quelconque des revendications précédentes, **caractérisée en ce que**
les fibres ont une longueur moyenne dans la plage de 2 mm à 12 mm, de préférence dans la plage de 3 mm à 8 mm.

13. Composition de dispersion selon l'une quelconque des revendications précédentes, **caractérisée en ce que** celle-ci constitue une composition d'enduit ou est un élément constitutif d'une composition d'enduit.

14. Système de couche d'enduit, obtenu par l'injection de la composition de dispersion et/ou par son application à la spatule d'après l'une quelconque des revendications mentionnées précédemment.

15. Système de couche d'enduit selon la revendication 14, comprenant en outre un tissu d'armature y étant intégré ou posé dessus.

16. Système de couche d'enduit selon la revendication 14 ou 15, comprenant en outre au moins un enduit de finition reposant sur la composition de dispersion et/ou le tissu d'armature.

17. Système de couche d'enduit selon l'une des revendications 14 à 16, comprenant en outre au moins une couche de peinture.

18. Système composite d'isolation thermique, comprenant un dispositif d'isolation thermique, en particulier un panneau d'isolation thermique avec une surface pouvant être enduite et au moins un système de couche d'enduit attenant à cette surface pouvant être enduite ou reposant dessus d'après l'une des revendications 14 à 17.

19. Système composite d'isolation thermique selon la revendication 18, **caractérisé en ce que**
le dispositif d'isolation thermique comprend ou constitue un dispositif d'isolation thermique à base de mousses polymères, notamment de mousses polymères styrènes, de préférence un panneau isolant de PSE, un panneau d'isolant thermique minéral, un panneau de matériau isolant en fibres naturelles, en particulier un panneau isolant de chanvre, ou un système composite, contenant au moins deux dispositifs d'isolation thermique différents l'un de l'autre, réalisés en particulier en version sandwich.

20. Utilisation de la composition de dispersion selon l'une des revendications 1 à 13 comme composition d'enduit ou comme un élément constitutif d'une composition d'enduit.

21. Utilisation du système composite d'isolation thermique selon la revendication 18 ou 19 pour revêtir des bâtiments ou des parties de ceux-ci.
